# FASCICULE DE BREVET EUROPEEN

(11) **EP 2 310 827 B1**
(45) Date de publication et mention de la délivrance du brevet: **04.01.2012**
(21) Numéro de dépôt: 09784252.0
(22) Date de dépôt: 07.07.2009
(51) Int. Cl.: G01N 3/10, G01N 33/24

(54) **CELLULE TRIAXIALE D'ESSAIS DE GÉOMATÉRIAUX SOUS PRESSION ET CISAILLEMENT**
DREIACHSIGE ZELLE ZUM TESTEN VON GEOMATERIALIEN UNTER DRUCK UND UNTER SCHERUNG
TRIAXIAL CELL FOR THE TESTING OF GEOMATERIALS IN COMPRESSION AND IN SHEAR

(30) Priorité: 07.07.2008 FR 0803850
(43) Date de publication de la demande: 20.04.2011
(73) Titulaire: UNIVERSITE DES SCIENCES ET TECHNOLOGIES DE LILLE, 59655 Villeneuve d'Ascq Cedex (FR)
(72) Inventeur: SECQ, Jean, F-59655 Villeneuve d'Asq (FR)
(74) Mandataire: Boubal, Denis Henri Jacques
(86) Numéro de dépôt international: PCT/FR2009/000837
(87) Numéro de publication internationale: WO 2010/004136

(56) Documents cités:
- EP-A- 0 349 422
- WO-A-98/21558
- FR-A- 2 663 121
- FR-A- 2 746 920
- US-A- 3 406 567
- US-A- 3 975 950
- US-A- 4 579 003
- US-A- 5 275 056

## Description

L'invention est relative à une cellule d'essais de géomatériaux sur des échantillons cylindriques, notamment de roches, de sols, ou des matériaux fabriqués sur des sites de prélèvement selon la revendication indépendante 1.

En particulier, la cellule permettra de soumettre l'échantillon au moins à une compression simple ou encore de soumettre l'échantillon à un essai triaxial. L'invention se rapporte également à l'utilisation d'une telle cellule d'essai selon la revendication indépendante 10.

Dans le domaine des géomatériaux, on connaît des cellules triaxiales, telles que par exemple enseignées du document FR-2.663.121, qui permettent de soumettre un échantillon cylindrique à différentes conditions de pression, de chargement, de température et de drainage. La cellule et l'échantillon sont à cet effet instrumentés de différents capteurs, tels que par exemple capteurs de pression, de température, de déplacement.

La cellule triaxiale comprend généralement un corps de cellule avec une cavité interne formant une chambre étanche à l'intérieur de laquelle est placé l'échantillon cylindrique, verticalement. Un circuit hydraulique, de mise en pression ou de vidange contrôlée est relié à la chambre étanche afin de soumettre la paroi latérale de l'échantillon à une contrainte radiale sous la pression d'un fluide. Bien souvent, cette contrainte est appliquée au travers d'une enveloppe élastique qui épouse et protège la paroi latérale de l'échantillon.

Dans la chambre étanche, un plateau inférieur et un plateau supérieur peuvent être rapprochés ou écartés l'un de l'autre pour contraindre l'échantillon selon son axe longitudinal, ou au contraire le décharger.

Le plateau inférieur peut être fixe par rapport au bâti constitué par une embase inférieure du corps de cellule, le plateau supérieur contraint au déplacement sous l'action d'un piston apte à coulisser au travers de la paroi supérieure du corps.

Lors des essais, il est ainsi possible de soumettre l'échantillon à une compression simple ou encore à un essai triaxial dans lequel on compresse l'échantillon selon son axe longitudinal et simultanément on exerce une contrainte radiale sur la paroi latérale de l'échantillon, sous l'action d'un fluide. Dans le cas d'un essai triaxial notamment, il est également possible de soumettre l'échantillon à des conditions de drainage afin d'étudier sa perméabilité.

Pour les tests de chargement/compression, voire de perméabilité, il peut être intéressant d'étudier un échantillon fissuré.

Aujourd'hui, afin d'obtenir l'échantillon fissuré, on brise l'échantillon préalablement à la phase de test, créant ainsi artificiellement la fissure. En pratique, on casse l'échantillon en deux et on le reconstitue dans la cellule d'essai. Il est à noter que l'on maîtrise assez mal la naissance de la fissure sur l'échantillon.

On connaît du document US-3.406.567, un dispositif de test, portatif, pour la mesure de l'effort de cisaillement d'un échantillon cylindrique, de neige ou de sol.

Ce dispositif comprend un cylindre creux, rigide, destiné à accueillir l'échantillon, ainsi qu'une paire de matrices, respectivement coulissantes au niveau des extrémités dudit cylindre creux. A cet effet, chaque matrice, de section ajustée au diamètre interne du cylindre creux, présente un téton destiné à engager avec une fente de guidage dudit cylindre creux.

La surface de contact de la matrice avec l'échantillon, de section semi-circulaire, s'étend seulement sur la moitié de la matrice, l'autre moitié présentant une cavité de telle façon à ne pas toucher l'échantillon sur cette zone. Les deux matrices sont agencées, l'une par rapport à l'autre de manière décalée.

L'une des matrices inférieures prend appui sur le bâti du dispositif, l'autre matrice étant mobile par rapport à ce bâti au moyen d'un vérin pour contraindre l'échantillon.

Lors des essais, il est alors possible de contraindre l'échantillon jusqu'à la fissuration dudit échantillon. L'effort de cisaillement peut être mesuré notamment par analyse de la courbe effort/temps.

Toutefois, une fois l'échantillon fissuré en deux parties, un tel dispositif permet difficilement de contrôler le déplacement relatif entre les deux parties.

Le but de la présente invention est de pallier les inconvénients précités en proposant une cellule d'essai permettant de fissurer in situ l'échantillon, en limitant le déplacement relatif des parties fissurées.

Un autre but de la présente invention est de pouvoir contrôler au moins aux extrémités de l'échantillon les positions de la fissure.

Un autre but de la présente invention est de proposer une cellule permettant au moins de soumettre l'échantillon à un essai de compression simple.

Un autre but de la présente invention est de proposer une cellule permettant de soumettre l'échantillon à un essai triaxial.

Un autre but de la présente invention est de proposer une cellule permettant d'effectuer des tests de perméabilité sur l'échantillon fissuré.

D'autres buts et avantages de la présente invention apparaîtront au cours de la description qui va suivre qui n'est donnée qu'à titre indicatif et qui n'a pas pour but de la limiter.

L'invention est relative à une cellule d'essai de géomatériaux sur des échantillons cylindriques, notamment de roches, de sols, ou des matériaux fabriqués sur des sites de prélèvement, comprenant au moins un piston pour soumettre un échantillon à une contrainte dirigée selon l'axe longitudinal de l'échantillon, la cellule présente, en outre, des moyens de cisaillement de l'échantillon aptes à permettre la fissuration de l'échantillon lors de la compression de l'échantillon par ledit au moins un piston.

Avantageusement, lesdits moyens de cisaillement sont constitués par deux éléments déformables de manière hétérogène, placés sous l'action dudit au moins un piston, respectivement en contact avec les bases de l'échantillon.

L'invention sera mieux comprise à la lecture de la description suivante accompagnée des dessins en annexe parmi lesquels :
- la figure 1 est une vue selon une coupe verticale d'une cellule, conforme à l'invention, selon un mode de réalisation, notamment une cellule d'essai triaxiale polyvalente,
- la figure 2 est une vue d'un élément déformable, conforme à l'invention, selon un mode de réalisation, substantiellement constitué de deux moitiés dans des matériaux de modules d'élasticité différents,
- la figure 3 et la figure 4 sont des vues de coupe de l'échantillon pris en sandwich par deux éléments déformables, tels qu'illustrés à la figure 2, selon deux positions angulaires relatives entre éléments.

L'invention est relative à une cellule 1 d'essai géomatériaux sur des échantillons, notamment de roches de sols ou des matériaux fabriqués sur des sites de prélèvement. Il peut s'agir d'une cellule d'essai permettant uniquement des essais de compression simple ou encore une cellule d'essai triaxiale.

La cellule 1 comprend au moins un piston 4, 5 pour soumettre un échantillon 2 cylindrique à une contrainte dirigée selon l'axe longitudinal de l'échantillon 2.

La cellule 1 présente, en outre, des moyens 7 de cisaillement de l'échantillon aptes à permettre la fissuration de l'échantillon lors de la compression de l'échantillon 2 par ledit au moins un piston.

L'intérêt de l'invention réside dans le fait de créer la fissure lors de la compression de l'échantillon par ledit piston 4, 5.

Après la création de la fissure dans le cas d'un essai triaxial, il est alors possible d'effectuer dans la continuité des essais de perméabilité, par exemple, sous différentes pressions de confinement, afin d'étudier notamment la variabilité de la perméabilité des surfaces de rupture soumises, par exemple à un léger déplacement, ou encore la cicatrisation de certains matériaux.

Les moyens 7 de cisaillement sont constitués par deux éléments déformables 7₁, 7₂ de manière hétérogène, placés sous l'action dudit au moins piston, respectivement en contact avec les bases de l'échantillon.

Avantageusement, chaque élément 7₁, 7₂ déformable de manière hétérogène peut présenter deux moitiés qui se déforment différemment l'une par rapport à l'autre lorsque contraintes.

Avantageusement, selon les exemples des figures notamment, les deux moitiés dudit élément déformable de manière hétérogène, qui se déforment différemment, présentent chacune une surface de contact avec l'échantillon. Avantageusement, lesdites surfaces de contact des deux moitiés peuvent être coplanaires au repos.

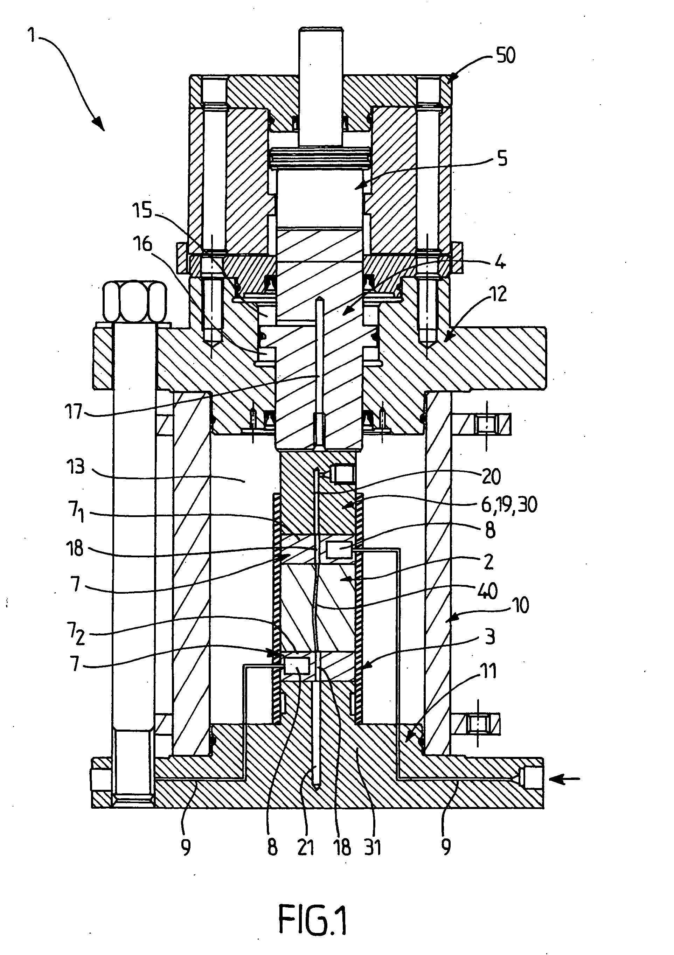

En se rapportant à la figure 1, les éléments déformables 7₁, 7₂ peuvent présenter chacun sur la moitié dudit élément une cavité interne formant une chambre déformable 8 sous la pression d'un fluide. La cellule présente au moins un circuit hydraulique 9 pour la mise en pression de ladite chambre.

Préalablement ou simultanément à la compression de l'échantillon par ledit au moins un cylindre 4, 5, on peut par exemple augmenter l'épaisseur de l'élément 7₁, 7₂ sur la moitié de la surface de contact, en mettant en pression la chambre 8 déformable. Les deux éléments 7₁, 7₂ en contact avec la base supérieure et inférieure de l'échantillon 2 peuvent être avantageusement décalés angulairement selon une rotation d'axe coaxial à l'axe d'échantillon.

Telle qu'illustrée, au repos, la surface de contact avec l'échantillon est plane et fait contact avec la base de l'échantillon sur toute sa surface. Ce n'est que lorsque la chambre 8 déformable est mise sous pression et/ou que lorsque le piston 4, 5 exerce son effort longitudinal, que la surface de contact se déforme pour permettre de cisailler l'échantillon.

Une fois l'échantillon fissuré en deux parties, le déplacement entre les parties est minime, les deux parties fissurées étant correctement maintenues par les éléments 7₁, 7₂, sans déplacement excessif.

On notera par ailleurs que la surface de contact de l'élément déformable 7₁, 7₂, plane au repos selon les exemples illustrés, permet de faciliter le montage de l'échantillon dans la cellule d'essai, notamment triaxiale Tel qu'illustré aux figures, selon un exemple, l'élément déformable 7₁ supérieur est cylindrique, en contact, d'une part, avec la base supérieure de l'échantillon 2, et d'autre part avec un plateau supérieur 30 lui-même contraint au déplacement par un piston 4.

L'élément déformable 7₂ inférieur est également cylindrique, en contact, d'une part avec la base inférieure de l'échantillon 2, et d'autre part avec un plateau inférieur 31, formé par une embase fixe par rapport au bâti de la cellule.

Lorsque les plateaux supérieur 30 et inférieur 31 sont rapprochés, les éléments déformables 7₁, 7₂ permettent de cisailler l'échantillon selon son axe longitudinal.

Lors de la compression, on crée ainsi une fissure 40 qui s'étend longitudinalement à l'échantillon, d'un élément déformable à l'autre. Lors des essais, il a été constaté que la fissure prend naissance à la frontière des deux zones de l'élément qui se déforment différemment. Il est alors possible de changer l'orientation des surfaces de rupture en effectuant une rotation d'un élément déformable 7₁ par rapport à l'autre 7₂.

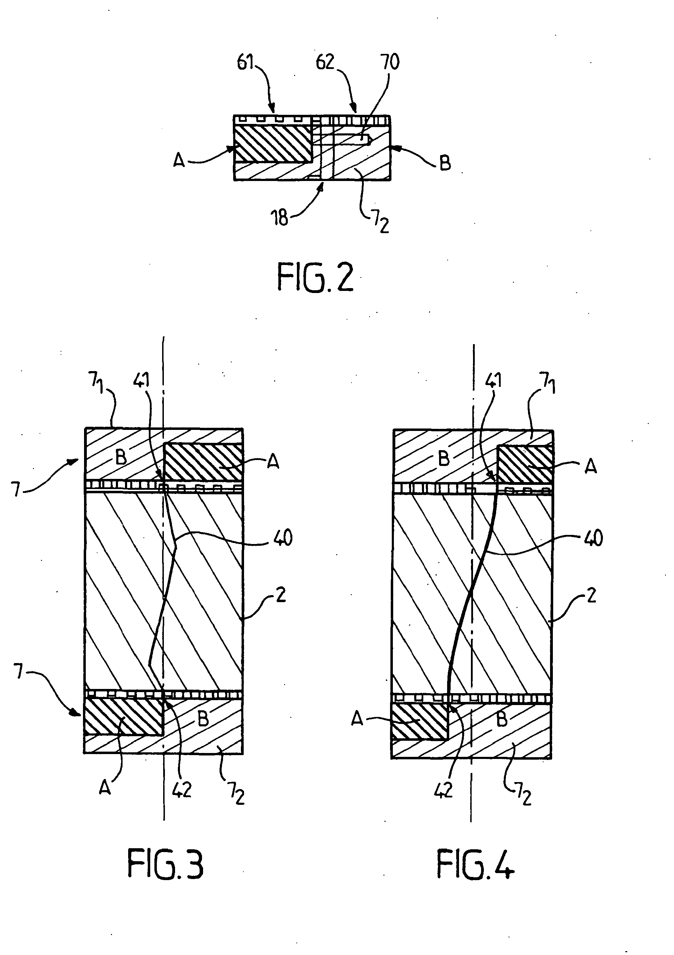

Selon un autre mode de réalisation, les éléments déformables 7₁, 7₂ de la cellule, illustrés à la figure 1, peuvent être remplacés par deux éléments déformables tels qu'illustrés à la figure 2.

Selon ce mode de réalisation illustré à la figure 2, chaque élément déformable 7₁, 7₂ est substantiellement constitué de deux moitiés A, B prévues dans des matériaux de modules d'élasticité différente.

Lorsqu'on compresse l'échantillon, la moitié B, par exemple de plus faible élasticité, exerce une contrainte supérieure par rapport à la contrainte exercée par la moitié A, alors de plus fort coefficient d'élasticité. En décalant angulairement, l'un par rapport à l'autre les éléments déformables 7₁, 7₂, il est alors possible de cisailler l'échantillon lors de la compression.

Selon l'exemple non limitatif, les éléments sont décalés d'une rotation d'axe coaxial audit axe longitudinal de l'échantillon. La moitié A notamment semi-cylindrique de plus forte élasticité est en élastomère, l'autre moitié B de plus faible élasticité peut être en métal. L'assemblage des deux moitiés A et B peut être obtenu par les techniques de surmoulage. La partie métallique peut présenter à cet effet un alésage 70 pour obtenir un enchevêtrement de matières lors du moulage.

Tel qu'illustré selon l'exemple de la figure 2, l'élément déformable comprend une partie cylindrique métallique qui définit sur la moitié de sa surface la moitié B en métal, l'autre moitié de sa surface de moindre épaisseur forme un épaulement pour le support de la moitié A en élastomère.

La moitié A est fixée à la partie B grâce aux techniques de surmoulage. Au repos, la surface de contact de la moitié A et celle de la moitié B sont à un même niveau, coplanaires. Ce n'est que lorsqu'elles sont soumises à la contrainte axiale que les deux moitiés se déforment différemment permettant d'obtenir le cisaillement de l'échantillon.

Tel qu'illustré aux figures 3 et 4 notamment, il a été constaté que l'amorce des fissures se situe toujours à la frontière 2 des deux zones de déformation différentes, notamment à la frontière entre la moitié A et la moitié B. Il est alors possible de contrôler l'orientation des surfaces de rupture en effectuant une rotation de l'élément déformable 7₁ par rapport à l'élément déformable 7₂ d'axe coaxial à l'axe longitudinal de l'échantillon.

Avantageusement, telle qu'illustrée à la figure 1, notamment selon un exemple, la cellule peut être une cellule triaxiale qui présente des moyens pour soumettre la paroi latérale de l'échantillon à la pression d'un fluide.

Le cas échéant, afin de protéger la paroi latérale de l'échantillon, la pression du fluide exerce une contrainte radiale au travers d'une enveloppe 3 élastique protégeant l'échantillon 2 en enveloppant sa paroi latérale.

Les moyens pour soumettre la paroi latérale de l'échantillon sont substantiellement constitués par une chambre étanche 13 à l'intérieur de laquelle est placé ledit échantillon relié à un circuit de mise en pression de ladite chambre (non illustré).

Selon l'exemple de la figure 1, la cellule est une cellule autonome et peut présenter :
- un corps de cellule 10, cylindrique, fermé de manière étanche par une embase inférieure 11 et un couvercle 12 avec une cavité interne formant la chambre étanche 13 à l'intérieur de laquelle est placé l'échantillon 2, cette chambre est reliée au circuit hydraulique pour la mise en pression de ladite chambre étanche,
- un piston principal 4, ajusté pour pouvoir coulisser dans un premier alésage traversant du couvercle 12, présentant une collerette 14 qui s'ajuste dans un deuxième alésage 2 dudit couvercle 12, de plus grand diamètre pour y délimiter deux chambres 15, 16. Le piston principal 4 présentant un canal d'autocompensation pour la mise en communication du fluide de ladite chambre étanche 13 et de ladite chambre annulaire supérieure 15,
- un module 50, fixé de manière amovible au couvercle 12 présentant un piston auxiliaire 15 apte à coopérer avec le piston principal 4, afin de rendre autonome ladite cellule.

La cellule peut présenter des moyens de drainage 6 pour soumettre l'échantillon au passage longitudinal d'un fluide de drainage.

Les moyens de drainage peuvent être constitués par un canal 20 mettant en communication le fluide de la chambre étanche 13 et la base supérieure de l'échantillon 2. Ce canal s'étend au travers du plateau supérieur 30 qui constitue alors une embase drainante 6. Ce canal s'étend au travers de l'élément déformable 7₁, supérieur, dans un canal 18 dudit élément. En partie basse de l'échantillon, le fluide s'évacue au travers d'un canal 18 de l'élément déformable inférieur 7₂, canal qui se prolonge par une conduite 21 qui s'étend dans l'embase de la cellule.

Les éléments déformables 7₁, 7₂ peuvent présenter sur leur surface en contact avec les bases de l'échantillon 2, des moyens pour répartir le fluide de drainage sur toute la surface de contact. Tels qu'illustrés à la figure 2 notamment, ces moyens peuvent être constitués par au moins deux grilles 61, 62 qui recouvrent respectivement deux surfaces qui se déforment de la même façon lors de la compression de l'échantillon.

Telle qu'illustrée à la figure 2, l'une des grilles 61 recouvre la moitié A de plus fort module d'élasticité, notamment en élastomère, l'autre grille 62 recouvrant l'autre moitié B de plus faible module d'élasticité, notamment en métal.

Il est à noter que ces grilles peuvent être également employées au niveau des surfaces de contact des éléments 7₁, 7₂ illustrés à la figure 1 présentant notamment la chambre 8 déformable. A cet effet, l'une des grilles recouvre la surface de la moitié sur laquelle s'étend la chambre 8, l'autre grille recouvrant la surface de l'autre moitié, pleine.

Avantageusement, des capteurs peuvent instrumenter l'échantillon, voire la cellule en vue d'étudier le cisaillement.

Il s'agit plus particulièrement :
- d'un ou plusieurs capteurs permettant de cibler le déplacement relatif des deux parties de l'échantillon cisaillées (ex capteurs LVDT noyés dans les éléments déformables 7₁, 7₂),
- d'un ou plusieurs capteurs placés le long de l'échantillon (ex collier instrumenté) permettant de cibler l'ouverture de la fissure, soit pendant la fissuration, soit pendant le glissement des deux parties cisaillées,
- d'un ou plusieurs capteurs pour mesurer la pression dans la fissure pendant les essais.

## Revendications

1. Cellule d'essai de géomatériaux sur des échantillons (2) cylindriques, de roches, de sols, ou des matériaux fabriqués sur des sites de prélèvement, comprenant au moins un piston (4, 5) pour soumettre un échantillon à un effort dirigé selon l'axe longitudinal de l'échantillon (2), ladite cellule (1) présentant des moyens (7) de cisaillement de l'échantillon aptes à permettre la fissuration de l'échantillon lors de la compression de l'échantillon (2) par ledit au moins un piston, lesdits moyens (7) de cisaillement étant constitués par deux éléments (7₁, 7₂), placés sous l'action dudit au moins piston, respectivement en contact avec les bases de l'échantillon, **caractérisé en ce que** chaque dit élément (7₁, 7₂) est un élément déformable de manière hétérogène, présentant deux moitiés (A, B) qui se déforment différemment l'une par rapport à l'autre lorsque contraintes, chaque moitié présentant une surface de contact avec l'échantillon, les surfaces de contact desdites deux moitiés étant coplanaires au repos.

2. Cellule selon la revendication 1, dans laquelle chaque dit élément déformable (7₁, 7₂) est substantiellement constitué de deux moitiés (A et B) dans des matériaux de modules d'élasticité différente.

3. Cellule selon la revendication 2, dans laquelle une des moitiés (A) est en élastomère, l'autre moitié (B) étant en métal.

4. Cellule selon la revendication 1, dans laquelle lesdits éléments déformables (7₁, 7₂) présentent chacun sur la moitié dudit élément une cavité Interne formant une chambre (8) déformable sous la pression d'un fluide, ladite cellule présentant au moins un circuit hydraulique (9) pour la mise en pression de ladite chambre (8).

5. Cellule selon l'une des revendications 1 à 4, dans laquelle les éléments (7₁, 7₂) déformables sont décalés angulairement, l'un par rapport à l'autre, selon une rotation d'axe coaxial audit axe longitudinal de l'échantillon.

6. Cellule selon l'une des revendications 1 à 4, dans laquelle ladite cellule est une cellule triaxiale qui présente des moyens pour soumettre la paroi latérale de l'échantillon à la pression d'un fluide, le cas échéant au
travers d'une enveloppe élastique protégeant ledit échantillon, lesdits moyens étant constitués par une chambre étanche (13) à l'intérieur de laquelle est placé ledit échantillon et un circuit de mise en pression de ladite chambre étanche.

7. Cellule selon la revendication 6, présentant des moyens de drainage (6) pour soumettre l'échantillon au passage longitudinal d'un fluide de drainage, lesdites éléments déformables (7₁, 7₂) présentant un canal pour la passage dudit fluide de drainage.

8. Cellule selon la revendication 7, dans laquelle les éléments déformables présentent sur leur surface en contact avec les bases de échantillon des moyens pour répartir le fluide de drainage sur toute la surface de contact.

9. Cellule selon la revendication 8, dans laquelle les moyens pour répartir le fluide de drainage sur toute la surface de contact sont constitués par deux grilles (61, 62) associées respectivement auxdites deux moitiés (A, B).

10. Utilisation de la cellule triaxiale selon l'une des revendications 6 à 9 pour fissurer l'échantillon et réaliser dans la continuité des essais de perméabilité.

## Claims

1. Cell for the testing of geomaterials on cylindrical samples(2), of rocks, ground or manufactured materials on sampling sites, comprising at least one piston (4, 5) for subjecting a specimen to a stress directed along the longitudinal axis of the sample (2), said cell (1) having means (7) for shearing the sample able to allow the cracking of the sample when the sample (2) is compressed by said at least one piston, said means (7) for shearing being comprised of two elements (7₁, 7₂), placed under the action of said at least one piston, respectively in contact with the bases of the specimen, **characterised in that** each said element (7₁, 7₂) is an element that can be deformed in a heterogeneous manner, having two halves (A, B) which are deformed differently in relation to one another when stressed, each half having a contact surface with the sample, the contact surfaces of said two halves being coplanar at rest.

2. Cell according to claim 1, wherein each said deformable element (7₁, 7₂) is substantially constituted of two halves (A and B) in materials of modules with different elasticity.

3. Cell according to claim 2, wherein one of the halves (A) is made of elastomer, the other half (B) being made of metal.

4. Cell according to claim 1, wherein said deformable elements (7₁, 7₂) each have on the half of said element an internal recess forming a chamber (8) that can be deformed under the pressure of a fluid, said cell having at least one hydraulic circuit (9) for the pressurising of said chamber (8).

5. Cell according to one of claims 1 to 4, wherein the deformable elements (7₁, 7₂) are offset angularly, in relation to one another, according to a rotation of axis that is coaxial to said longitudinal axis of the sample.

6. Cell according to one of claims 1 to 4, wherein said cellule is a triaxial cell which has means for subjecting the lateral wall of the specimen to the pressure of a fluid, where applicable through an elastic envelope protecting said sample, said means being constituted by a sealed chamber (13) in which said sample is placed and a circuit for the pressurising of said sealed chamber.

7. Cell according to claim 6, having means for draining (6) in order to subject the sample to the longitudinal passage of a drainage fluid, said deformable elements (7₁, 7₂) having a canal for the passage of said drainage fluid.

8. Cell according to claim 7, wherein the deformable elements have on their surface in contact with the bases of the sample means for distributing the drainage fluid across the entire contact surface.

9. Cell according to claim 8, wherein the means for distributing the drainage fluid across the entire contact surface are comprised of two grids (61, 62) associated respectively to said two halves (A, B).

10. Use of the triaxial cell according to one of claims 6 to 9 in order to crack the sample and carry out in continuity permeability tests.

## Patentansprüche

1. Prüfzelle von Geomaterialien auf zylindrischen Proben (2) von Felsen, Böden oder Materialien, die an Entnahmestellen hergestellt wurden, umfassend mindestens einen Kolben (4, 5), um eine Probe einer Kraft zu unterziehen, die gemäß der Längsachse der Probe (2) ausgerichtet ist, wobei die Zelle (1) Mittel (7) zur Scherung der Probe aufweist, die dazu geeignet sind, die Verursachung von Rissen der Probe bei der Kompression der Probe (2) durch den mindestens einen Kolben zu ermöglichen, wobei die Mittel (7) zur Scherung aus zwei Elementen (7₁, 7₂) bestehen, die der Wirkung des mindestens eines Kolbens unterzogen werden bzw. in Kontakt mit den Sockeln der Proben gebracht werden, **dadurch gekennzeichnet, dass** jedes Element (7₁, 7₂) ein auf heterogene Weise verformbares Element ist, das zwei Hälften (A, B) aufweist, die sich in Bezug aufeinander verschieden verformen, wenn sich gespannt sind, wobei jede Hälfte eine Kontaktfläche mit der Probe aufweist, wobei die Kontaktflächen der zwei Hälften in Ruhe koplanar sind.

2. Zelle nach Anspruch 1, wobei jedes verformbare Element (7₁, 7₂) im Wesentlichen aus zwei Hälften (A und B) aus Materialien mit verschiedenem Elastizitätsmodul besteht.

3. Zelle nach Anspruch 2, wobei eine der Hälften (A) aus Elastomer, die andere Hälfte (B) aus Metall besteht.

4. Zelle nach Anspruch 1, wobei die verformbaren Elemente (7₁, 7₂) jeweils auf der Hälfte des Elements einen inneren Hohlraum aufweisen, der eine Kammer (8) bildet, die unter dem Druck eines Fluids verformbar ist, wobei die Zelle mindestens einen hydraulischen Kreislauf (9) für die Unterdrucksetzung der Kammer (8) aufweist.

5. Zelle nach einem der Ansprüche 1 bis 4, wobei die verformbaren Elemente (7₁, 7₂) winklig gegeneinander entlang einer Drehung mit einer Achse versetzt sind, die koaxial zur Längsachse der Probe ist.

6. Zelle nach einem der Ansprüche 1 bis 4, wobei die Zelle eine triaxiale Zelle ist, die Mittel aufweist, um die seitliche Wand der Probe dem Druck eines Fluids zu unterwerfen, gegebenenfalls über eine elastische Hülle, die die Probe schützt, wobei die Mittel aus einer dichten Kammer (13) bestehen, in deren Inneren die Probe angebracht ist, und einem Kreislauf zur Unterdrucksetzung der dichten Kammer.

7. Zelle nach Anspruch 6, umfassend Mittel zur Drainage (6), um die Probe dem Längsdurchfluss eines Drainagefluids aufzusetzen, wobei die verformbaren Elemente (7₁, 7₂) einen Kanal für den Durchfluss des Drainagefluids aufweisen.

8. Zelle nach Anspruch 7, wobei die verformbaren Elemente auf ihrer Oberfläche, die mit den Sockeln der Probe in Kontakt steht, Mittel aufweisen, um das Drainagefluid auf der ganzen Kontaktfläche zu verteilen.

9. Zelle nach Anspruch 8, wobei die Mittel, um die Drainageflüssigkeit auf der ganzen Kontaktfläche zu verteilen, aus zwei Gittern (61, 62) bestehen, die jeweils mit den zwei Hälften (A, B) verbunden sind.

10. Verwendung der triaxialen Zelle nach einem der Ansprüche 6 bis 9, um die Probe mit Rissen zu versehen und anschließend Durchlässigkeitsprüfungen durchzuführen.
